Europäisches Patentamt

European Patent Office

Office européen des brevets

(11) Veröffentlichungsnummer: **0 092 177**
**A2**

(12) **EUROPÄISCHE PATENTANMELDUNG**

(21) Anmeldenummer: **83103615.7**

(51) Int. Cl.³: **G 06 K 11/06**

(22) Anmeldetag: **14.04.83**

(30) Priorität: **20.04.82 DE 3214426**

(43) Veröffentlichungstag der Anmeldung: **26.10.83**
Patentblatt 83/43

(84) Benannte Vertragsstaaten: **FR GB IT NL**

(71) Anmelder: **Albert Nestler GmbH, Alte Bahnhofstrasse 10, D-7630 Lahr (DE)**

(72) Erfinder: **Schaub, Dietmar, Dipl.-Ing., Georg Vogel Strasse 2, D-7630 Lahr (DE)**
Erfinder: **Heups, Gert, Briehelweg 20, D-7635 Schwanau 2 (DE)**

(74) Vertreter: **Durm Klaus, Dr.-Ing., Felix-Mottl-Strasse 1 a, D-7500 Karlsruhe 21 (DE)**

(54) **Elektronischer Griffel für Digitalisiergeräte.**

(57) Die Erfindung betrifft einen elektronischen Griffel für Digitalisiergeräte, mit welchem konstruiert und digitalisiert werden kann. In einem Trägerrohr (2) sitzt eine Feinminen-einheit (1) mit Minenbehälter (8) und nachschiebbarer Graphit-Mine (7); die Minenführung (32) ist von einer abnehmbaren Induktionsspule (31) umgeben, mit welcher das Digitalisiergerät aktiviert wird.

Mit Hilfe einer längsverschiebbaren Griffhülse (3) und einem an dieser sitzenden Drehring (23) wird ein auf dem Trägerrohr sitzender, kombinierter Tast- und Ein-Aus-Schalter, der unter Verwendung einer flexiblen Leiterplatte aufgebaut ist, betätigt.

0092177

N 3169/83-EU

## Elektronischer Griffel für Digitalisiergeräte

Die Neuerung bezieht sich auf einen elektronischen Griffel für Digitalisiergeräte, welcher mittels elektrischer Verbindungsleitungen mit dem Digitalisiergerät in Verbindung steht, mit einem längsverschiebbaren Markierstift, einem elektrischen Tastschalter sowie einem den Markierstift umgebenden Spulenkörper mit einer Induktionsspule.

Die Neuerung findet insbesondere Anwendung in Verbindung mit Digitalisiergeräten, die in Zeichenbüros bei der Erstellung von technischen Zeichnungen benutzt werden.

Es ist seit etwa zwei Jahrzehnten bekannt, fertige, technische Zeichnungen mit Hilfe eines Digitalisiergerätes zu digitalisieren und in einer hierfür geeigneten Rechenanlage zu speichern, um sie bei Bedarf auf einem Bildschirm sichtbar zu machen und/oder von einer elektrischen Zeicheneinrichtung (Plotter) auf Papier ein- oder mehrfarbig auszeichnen zu lassen. Zum Digitalisieren wird die Zeichnung auf das mit elektronischen Einrichtungen versehene Tableau des Digitalisiergerätes gelegt und die einzelnen Zeichenlinien werden sodann mit einem elektrisch an das Digitalisiergerät angeschlossenen, elektronischen Griffel oder einer elektronischen, mit einem Fadenkreuz versehenen Lupe - die von Hand geführt werden - nachgefahren.

Die bekannten elektronischen Griffel besitzen einen ein kleines Stück längsverschiebbaren Markierstift, welcher von einer das elektronische Tableau aktivierenden Induktionsspule umgeben ist. Diese Induktionsspule wird unter Strom gesetzt, sobald und solange durch Aufdrükken des Markierstiftes auf eine Zeichenlinie ein im Griffel eingebauter Tastschalter betätigt wird.

Bei allen bekannten Ausführungsformen der elektronischen Griffel ist der Markierstift ein handelsüblicher, auswechselbarer Kugelschreibereinsatz. Beim Nachfahren der Zeichenlinien während des Digitalisierens werden diese von dem Kugelschreiber markiert, sodaß die bereits digitalisierten Teile der Zeichnung erkennbar sind. Die fertig digitalisierte Zeichnung ist wegen der Markierungen unbrauchbar geworden.

Eine Anlage zum Digitalisieren, bestehend aus Digitalisierer, Rechenanlage, Bildschirm und Plotter ist aufwendig und teuer, mit ihrer Hilfe lassen sich nur fertig ausgeführte technische Zeichnungen digitalisieren. Es ist nicht möglich, auf dem Tableau des Digitalisiergerätes auch nur unbedeutende Konstruktionsarbeiten auszuführen, weil mit dem Kugelschreibereinsatz des Griffels nicht auf Transparentpapier gezeichnet werden kann,da dieses Papier keine Kugelschreiber-Farbe annimmt. Auch bei Verwendung von weißem Zeichenpapier kann nicht konstruiert werden, weil die Kugelschreiber-Farbe nicht wegradiert werden kann - kein Konstrukteur kann ohne Radiergummi arbeiten.

Eine Lösung, den Kugelschreibereinsatz des Griffels etwa durch einen Bleistift zu ersetzen, um damit konstruieren zu können, ist bisher nicht gefunden worden, weil dieser beim Gebrauch im Gegensatz zum Kugelschreibereinsatz seine Länge verändert. Diese Längenveränderung schien wegen der unumgänglichen Notwendigkeit der Betätigbarkeit des im Griffel eingebauten Tastschalters ein unüberwindbares Hemmnis für den Austausch des längsverschiebbaren Kugelschreibereinsatzes gegen ein anderes, geeigneteres Markiermittel. Hier setzt die Neuerung an.

Der Neuerung liegt die Aufgabe zugrunde, einen Griffel für Digitalisiergeräte so auszubilden, daß mit seiner Hilfe nicht nur digitalisiert, sondern auch konstruiert werden kann.

Ausgehend von einem Griffel der eingangs beschriebenen Art wird die gestellte Aufgabe dadurch gelöst, daß der Markierstift als Bleistifteinsatz mit nachschiebbarer Graphit-Mine ausgebildet ist, daß der Spulenkörper einen Steckrand trägt, elektrische Steckbuchsen aufweist, eine Minenbremse enthält und eine Minenführung trägt, daß eine den Tastschalter betätigende, gegen den Druck einer Feder längsverschiebbare Griffhülse vorhanden ist, die den Griffel über seine Länge wenigstens teilweise umgibt, und daß an der Griffhülse ein Drehring drehbar befestigt ist, der einen elektrischen Ein-Aus-Schalter betätigt.Durch die Verwendung eines Bleistifteinsatzes mit nachschiebbarer Graphit-Mine wird der neuerungsgemäße Griffel zum Handwerkszeug des Konstrukteurs, mit welchem dieser in gewohnter Weise seine

0092177

Bleistiftzeichnungen auf Pauspapier erstellen kann. Mittels des vorgesehenen Ein-Aus-Schalters läßt sich während des Konstruierens das Digitalisieren unterbinden, indem die Funktion des Tastschalters außer Betrieb gesetzt wird. Die Betätigung dieses Vorganges kann leicht durch eine Fingerbewegung der den Griffel führenden Hand während des Konstruierens oder Digitalisierens geschehen. Mit dem neuerungsgemäßen Griffel kann der Arbeitsvorgang des nachträglichen Digitalisierens der fertigen Zeichnung eingespart werden, weil es bei geübter Handhabung möglich ist, mit dem Griffel gleichzeitig zu konstruieren und zu digitalisieren.

Zweckmäßig ist der Bleistifteinsatz eine Feinmineneinheit mit Minenbehälter sowie Schieb- und Klemmvorrichtung. Die Verwendung einer Feinmineneinheit eines bewährten, handelsüblichen Feinminenstiftes gewährleistet hohe Betriebssicherheit und ermöglicht es, den neuerungsgemäßen Griffel problemlos in verschiedenen Strichstärken anzubieten.

Aus konstruktiven Gründen sitzt die Feinmineneinheit vorteilhaft in einem Trägerrohr.

Am einen Ende des Trägerrohres sitzt zweckmäßigerweise eine aus einem elektrisch isolierenden Material bestehende Zentrierhülse, welche Steckkontakte trägt.

Nach einem weiteren Merkmal der Neuerung sind auf dem Trägerrohr vier elektrische Leiterbahnen isoliert befestigt, welche von einer Kontaktplatte mit vier Kontakten ausgehen; zwei dieser Leiterbahnen sind mit den Steckkontakten verbunden.

In besonders vorteilhafter Ausgestaltung der Neuerung ist der Ein-Aus-Schalter mit dem Tastschalter kombiniert und durch zwei im Abstand nebeneinander liegende Verbreiterungen von zwei Leiterbahnen gebildet, über denen eine elektrisch leitende Kontaktplatte gleitet, die in einer am Drehring angesetzten, aus isolierendem Material bestehenden Kontakthülse sitzt. Der Gedanke, die beiden Schalter konstruktiv zu kombinieren, läßt die aufgrund der sehr beengten Platzverhältnisse im Griffel auftretenden Probleme relativ leicht lösen.

Zweckmäßig ist auf dem Trägerrohr im Bereich der Kontaktplatte eine das Trägerrohr umfassende, im Querschnitt U-förmige Kabelklammer aufgeschoben, welche mit zwei Längsnuten versehen ist. In diese Kabelklammer ist ein Kabelschuh einschiebbar, in welchem die elektrischen Verbindungsleitungen an einer flexiblen Leiterplatte angelötet sind, die um eine Druckwalze gelegt ist, die in einer Leiterplattenklammer mit zwei Längsrinnen steckt, wobei die Druckwalze eine Längsausnehmung trägt, in welche ein Stab aus elastischem Schaumstoff eingelegt ist.

Die Neuerung wird nachstehend an einem Ausführungsbeispiel unter Bezugnahme auf die beigefügten Zeichnungen näher erläutert. Es zeigen:

Fig. 1 a,b,c    einen elektronischen Griffel in einem Längsschnitt;

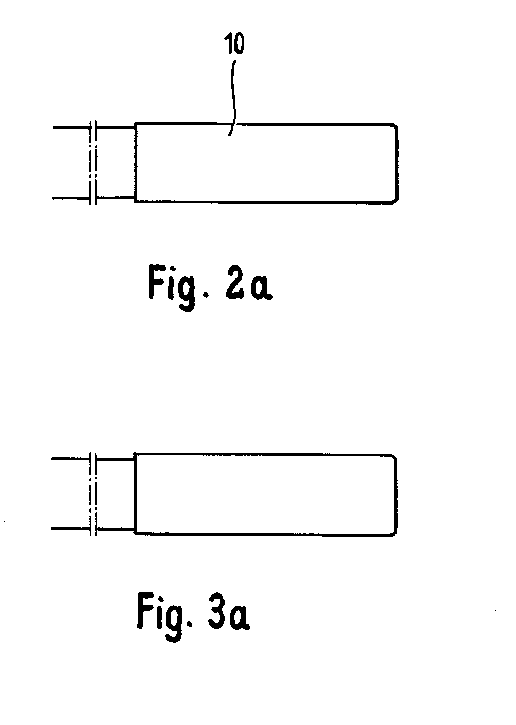

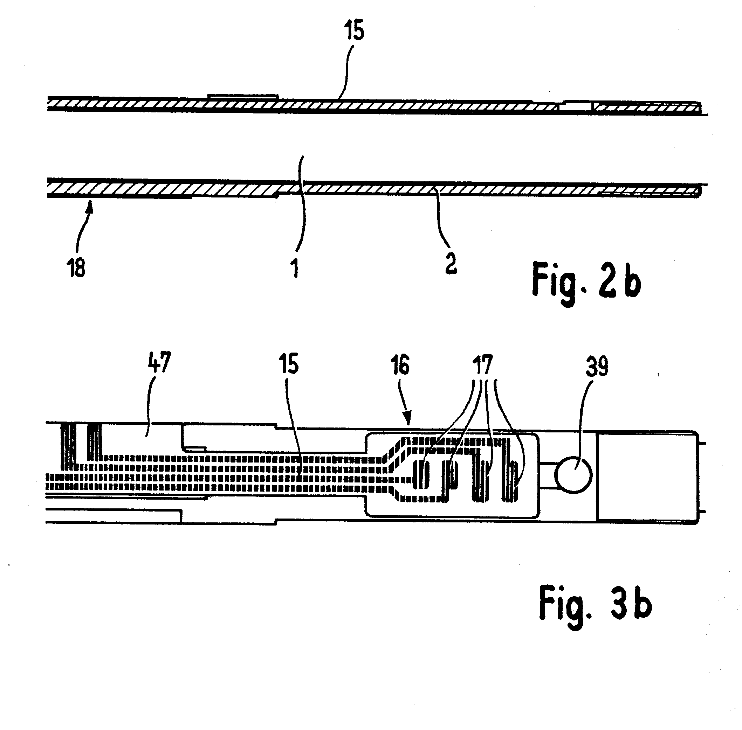

Fig. 2 a,b,c    das Trägerrohr des Griffels gemäß Figur 1 mit einer Zentrierhülse und einer Feinmineneinheit, in einem Längsschnitt;

Fig. 3 a,b,c    das Trägerrohr mit der Zentrierhülse und der Feinmineneinheit nach Figur 2, mit Leiterbahnen, in einer Draufsicht;

0092177

Fig.4     die zum Tast- und Ein-Aus-Schalter gehörenden Verbreiterungen der Leiterbahnen,
          in einer Draufsicht;

Fig. 5    eine Kabelklammer des Griffels nach Figur 1, in einer Vorderansicht;

Fig. 6    die Kabelklammer nach Figur 5, in einem
          Längsschnitt, geschnitten entlang der
          Linie VI - VI in Figur 5;

Fig. 7    einen zum Griffel gemäß Figur 1 gehörender Kabelschuh in einem Längsschnitt;

Fig. 8    den Kabelschuh nach Figur 7, in einem
          Querschnitt, geschnitten entlang der
          Linie VIII - VIII in Figur 7;

Fig. 9    eine flexible Leiterplatte des Kabelschuhs gemäß Figur 8.

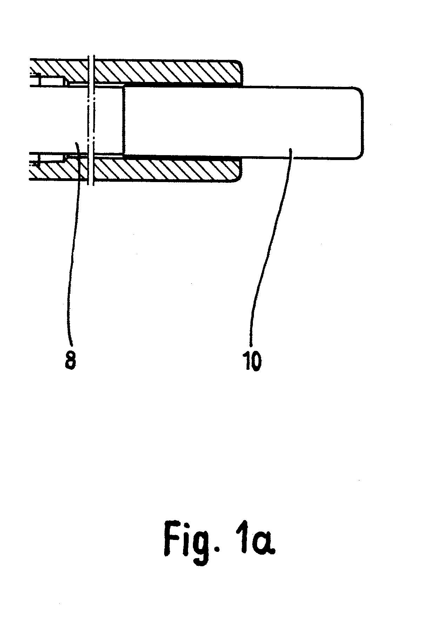

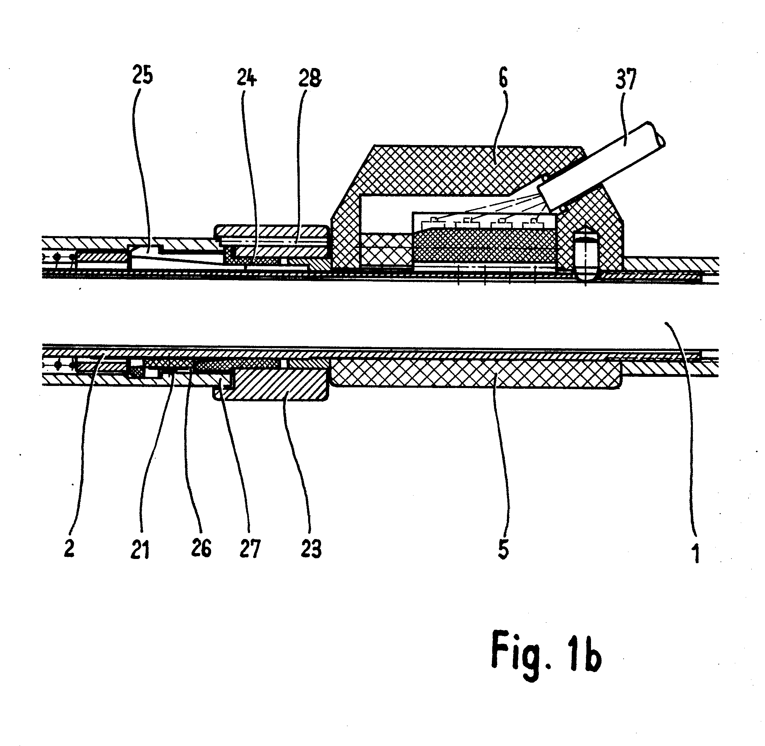

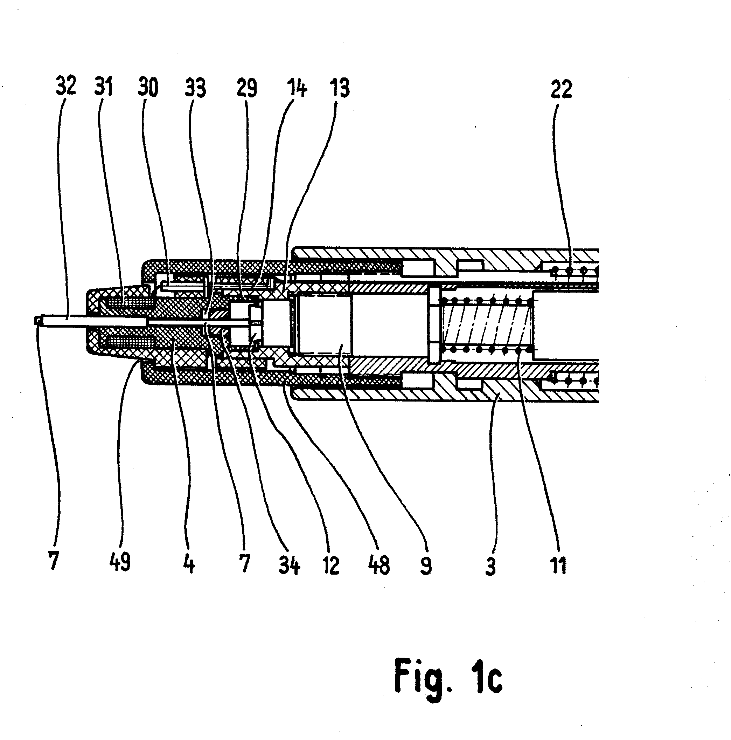

Ein neuerungsgemäßer elektronischer Griffel für Digitalisiergeräte besteht (vgl. Figur 1) im wesentlichen aus
einer Feinmineneinheit 1, einem Trägerrohr 2, einer
Griffhülse 3, einem Spulenkörper 4, einer Kabelklammer
5 und einem Kabelschuh 6.

Bei der Feinmineneinheit 1 handelt es sich um einen
Bleistifteinsatz mit einer nachschiebbaren Graphit-Mine
7, mit einem Minenbehälter 8 sowie einer Schiebe- und
Klemmvorrichtung 9. Der Minenbehälter 8, welcher den
Vorrat an nachschiebbaren,dünnen Graphit-Minen 7 aufnimmt, ist durch eine abnehmbare Kappe 10 verschlossen.
Bei der Feinmineneinheit 1 ist der Minenbehälter 8 gegen die Einwirkung einer Druckfeder 11 gegenüber der Schiebe- und Klemmvorrichtung 9, die mit einem Dreibakkenfutter 12 ausgestattet ist, verschiebbar. Durch Eindrücken der Kappe 10 wird die Graphit-Mine 7 von der Schiebe- und Klemmvorrichtung 9 ein Stück hervorgeschoben.

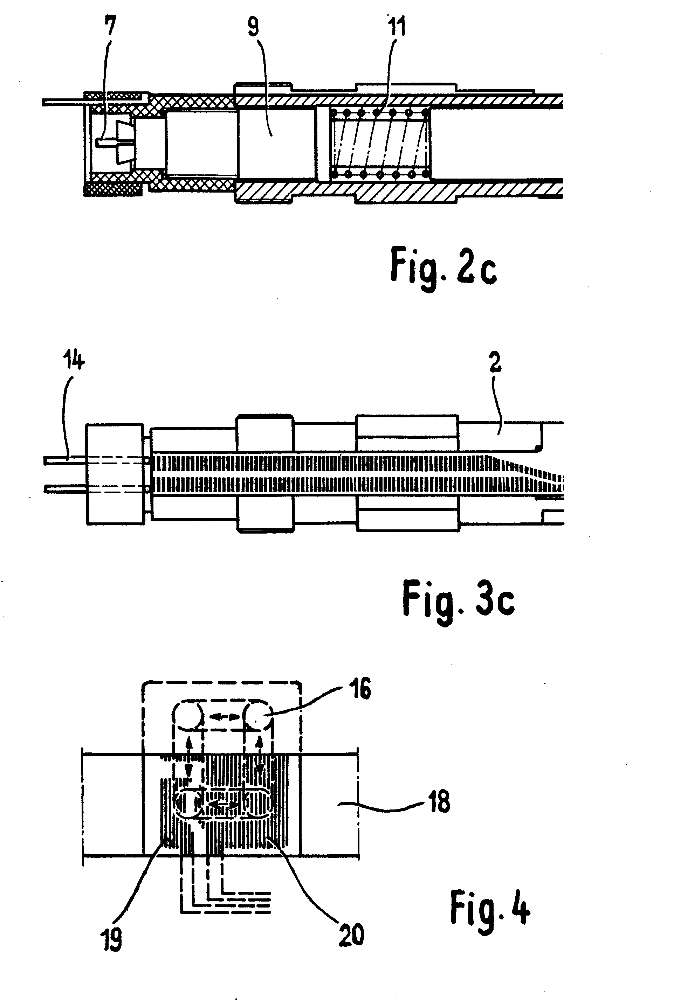

Die Feinmineneinheit 1 sitzt in dem Trägerrohr 2 aus Metall und ist dort im Bereich der Schiebe- und Klemmvorrichtung 9 befestigt. Am vorderen Ende dieses Trägerrohres 2 ist eine aus einem elektrisch isolierenden Material bestehende Zentrierhülse 13 vorgesehen, welche zwei elektrische Steckkontakte 14 trägt. Das Trägerrohr 2 weist an seinem Mantel in Längsrichtung eine Abflachung auf, auf welcher vier elektrische Leiterbahnen 15 (vgl. Figur 3) isoliert befestigt sind, die von einer Kontaktplatte 16 mit vier elektrischen Kontakten 17 ausgehen. Zwei dieser Leiterbahnen 15 sind mit den beiden Steckkontakten 14 elektrisch verbunden.

Der elektronische Griffel ist mit einem elektrischen Tastschalter und einem Ein-Aus-Schalter 18 versehen (vgl. Figur 4), welche durch zwei Verbreiterungen 19 und 20 zweier Leiterbahnen 15 gebildet sind. Diese beiden, aus dem gleichen Metall wie die Leiterbahnen 15 bestehenden Verbreiterungen 19 und 20 sind zylindrisch gewölbt und auf dem Trägerrohr 2 isoliert befestigt, eine Abwicklung der Verbreiterungen 19 und 20 in die Ebene ist in Figur 4 mit Strichlinien angedeutet.Das Schaltelement dieses kombinierten Tast- und Ein-Aus-Schalters 18 ist (Figur 1) eine elektrisch leitende, kleine, niedere, kreiszylindrische Kontaktpille 21, welche - wie in Figur 4 mit strichpunktierten Linien angedeutet - über den beiden Verbreiterungen 19 und 20 (entsprechend der vier eingezeichneten Pfeile) gleitet und diese je nach ihrer Stellung elektrisch miteinander verbindet oder nicht.

Die Griffhülse 3 sitzt gegen den Druck einer Spiralfeder 22 ein Stück längsverschiebbar über dem Trägerrohr 2 (Figur 1) und sie umgibt den Griffel über etwa die Hälfte seiner Länge. An der Griffhülse 3, an welcher der Griffel beim Zeichnen und/oder Digitalisieren mit Daumen, Zeige- und Mittelfinger der Hand ergriffen wird, ist ein Drehring 23 drehbar befestigt - vergleiche Figur 1. An den Drehring 23 ist eine aus elektrisch isolierendem Material gefertigte Kontakthülse 24 angesetzt, die mit elastischen Spreizfingern 25 mit der Griffhülse 3 verbunden ist. In einem dieser Spreizfinger 25 ist eine kreisförmige Ausnehmung 26 vorgesehen, in welcher die Kontaktplatte 21 sitzt.

Die Funktion des kombinierten Tast- und Ein-Aus-Schalters 18 ist folgende. Die Griffhülse 3 besitzt an ihrem Rand eine Schulter 27, welche eine Randausnehmung einschließt, und in diese Randausnehmung greift ein Stift 28 ein, der im Drehring 23 steckt, wodurch dessen Drehbewegung auf einen Winkel von etwa 90 Grad begrenzt wird. Die Anordnung ist so getroffen, daß in der einen Drehendstellung des Drehringes 23 die Kontaktpille 21 bei Längsverschiebung der Griffhülse 3 ausschließlich über der einen Verbreiterung 20 (vgl. Figur 4) gleitet, während in der anderen Drehendstellung die Kontaktplatte 21 über beiden Verbreiterungen 19 und 20 liegt. Dies hat zu Folge, daß in der einen Drehendstellung des Drehringes der "Tastschalter" bei der Längsverschiebung der Griffhülse 3 nicht betätigt wird, während er in der anderen Drehstellung bei jeder Längsverschiebung die beiden Verbreiterungen 19 und 20 miteinander (durch die Kontaktplatte 16) elektrisch verbindet. Durch Verdrehen des Drehringes 23 wird demgemäß der "Ein-Aus-Schalter" betätigt, während durch Verschieben der Griffhülse 3 der "Tastschalter" in Tätigkeit gesetzt wird, der zum Digitalisieren benötigt wird.

Der Spulenkörper 4 besteht aus einem geeigneten Isoliermaterial und trägt einen Steckrand 29, mit dessen Hilfe er in die Zentrierhülse 13 eingesteckt ist. An der einen Seite des Spulenkörpers 4 sind zwei elektrische Steckbuchsen 30 eingesetzt, an denen die Enden der Wicklung einer Induktionsspule 31 - mit deren Hilfe ein Digitalisiergerät aktiviert wird - angelötet sind.

Der Spulenkörper 4 ist abnehmbar, damit die Schiebe- und Klemmeinrichtung 9 der Feinmineneinheit 1 zum Zwecke der Reinigung und bei Störungen der Zufuhr der Graphit-Minen 7 leicht zugänglich ist.

In der Längsachse des Spulenkörpers 4 sitzt eine Minenführung 32 in Gestalt eines dünnen Metallröhrchens, in dem die Graphit-Mine 7 längsverschiebbar geführt ist. Der Spulenkörper 4 weist eine rückwärtige Sackbohrung 33 auf, in welche eine Minenbremse 34 - ein kurzes Stück eines kleinen Rohres aus einem gummielastischen Material - eingesetzt ist.

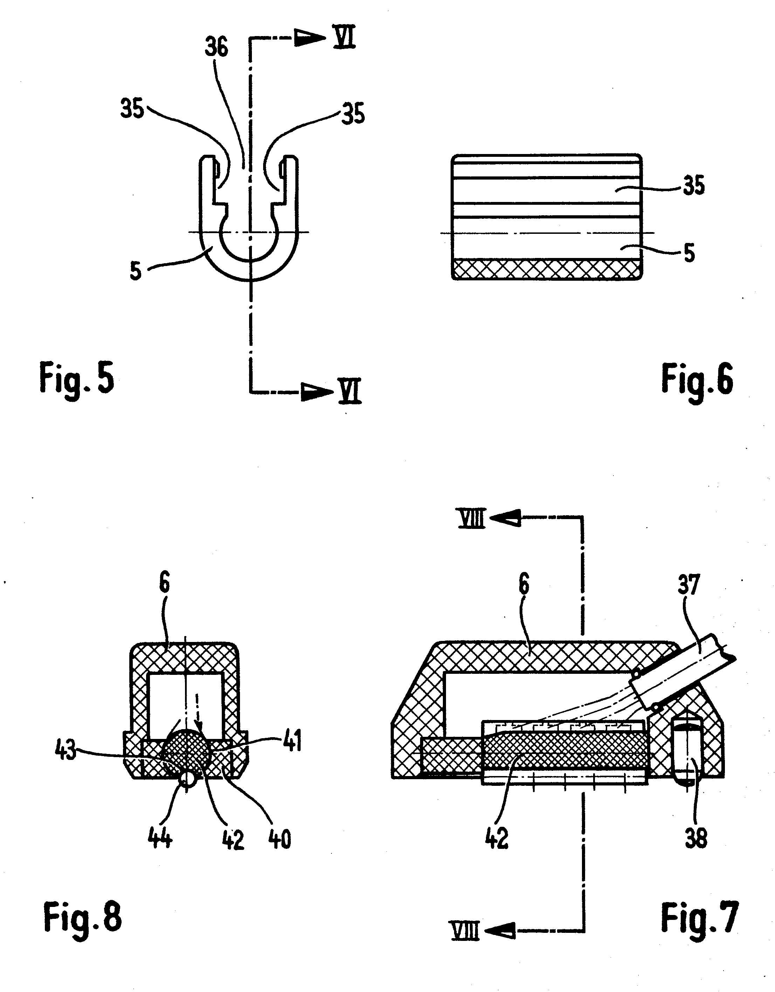

Die Kabelklammer 5 besteht beispielsweise aus einem geeigneten Kunststoff und sitzt auf dem Trägerrohr 2 im Bereich der Kontaktplatte 16 - siehe Figur 1. Diese Kabelklammer 5 ist (vgl. Figur 5) im Querschnitt U-förmig ausgebildet und sie ist mit zwei Längsnuten 35 versehen. Die Kabelklammer 5 ist so montiert, daß in ihrer Öffnung 36 die Kontaktplatte 16 liegt.

Der Kabelschuh 6, in welchen die zum Digitalisiergerät (nicht dargestellt) führenden elektrischen Verbindungsleitungen 37 hineingeführt sind, ist in die Kabelklammer 5 eingeschoben, Figur 1. Ein Raststift 38 (vgl. Figur 7), der in eine Vertiefung 39 im Trägerrohr 2 eingreift, hält den Kabelschuh 6 fest.

0092177

Im Kabelschuh 6 ist eine Leiterplattenklammer 40 (Figur 8) vorgesehen, welche zwei zylindrisch ausgebildete Längsrinnen 41 aufweist. In den Längsrinnen 41 steckt eine zylindrische Druckwalze 42 mit einer Längsausnehmung 43, in welche ein dünner Stab 44 aus einem elastischen Schaumstoff eingelegt ist.

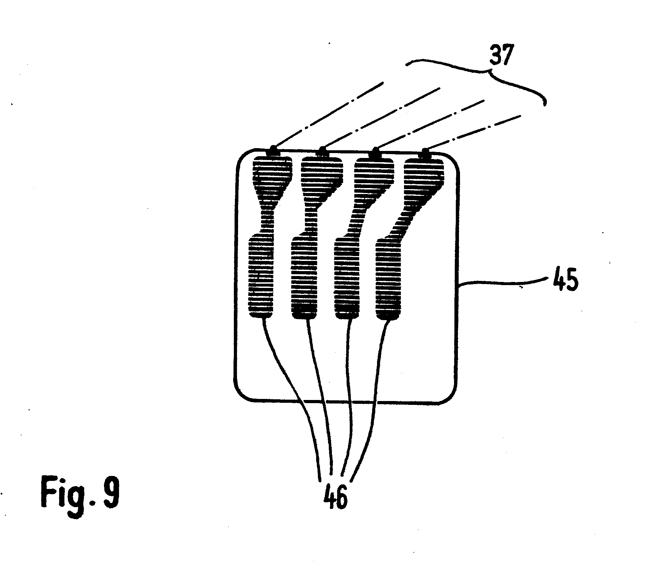

Um die Druckwalze 42 des Kabelschuhs 6 ist eine flexible, elektrische Leiterplatte 45 (siehe Figur 9) gelegt, wie dies in Figur 8 erkennbar ist. Diese Leiterplatte 45 trägt vier Leiterstücke 46 aus einem biegsamen Metall, an welche vier Verbindungsleitungen 37 angelötet sind. Bei in die Kabelklammer 5 eingeschobenem Kabelschuh 6 berühren die vier Leiterstücke 46 die vier am Trägerrohr 2 angeordneten Kontakte 17, und durch den mittels des Stabes 44 ausgeübten, elastischen Druck wird die elektrische Verbindung hergestellt.

Die Leiterbahnen 15, die Kontakte 17 und die Verbreiterungen 20 sitzen auf einer gemeinsamen, aus elektrisch isolierendem Material bestehenden, biegsamen Folie 47, welche mittels eines geeigneten Klebers auf dem Trägerrohr 2 angeklebt ist.

Eine vorn auf dem Trägerrohr 2 aufgeschraubte, zylindrische Abdeckklappe 48 mit einer vorderen Öffnung 49 deckt den Spulenkörper 4 ab.

N 3169/83-EU

## Zusammenstellung der verwendeten Bezugsziffern

| | | | |
|---|---|---|---|
| 1 | Feinmineneinheit | 25 | Spreizfinger |
| 2 | Trägerrohr | 26 | Ausnehmung |
| 3 | Griffhülse | 27 | Schulter |
| 4 | Spulenkörper | 28 | Stift |
| 5 | Kabelklammer | 29 | Steckrand |
| 6 | Kabelschuh | 30 | Steckbuchsen |
| 7 | Graphit-Mine | 31 | Induktionsspule |
| 8 | Minenbehälter | 32 | Minenführung |
| 9 | Schiebe-und Klemmvorrichtung | 33 | Sackbohrung |
| 10 | Kappe | 34 | Minenbremse |
| 11 | Druckfeder | 35 | Längsnuten |
| 12 | Dreibackenfutter | 36 | Öffnung |
| 13 | Zentrierhülse | 37 | Verbindungsleitungen |
| 14 | Steckkontakte | 38 | Raststift |
| 15 | Leiterbahnen | 39 | Vertiefung |
| 16 | Kontaktplatte | 40 | Leiterplattenklammer |
| 17 | Kontakte | 41 | Längsrinne |
| 18 | Tast-und Ein-Aus-Schalter | 42 | Druckwalze |
| 19 | Verbreiterung | 43 | Längsausnehmung |
| 20 | Verbreiterung | 44 | Stab |
| 21 | Kontaktpille | 45 | Leiterplatte |
| 22 | Spiralfeder | 46 | Leiterstücke |
| 23 | Drehring | 47 | Folie |
| 24 | Kontakthülse | 48 | Abdeckplatte |
| | | 49 | Öffnung |

N 3169/83-EU

<u>Patentansprüche</u>

1. Elektronischer Griffel für Digitalisiergeräte, welcher mittels elektrischer Verbindungsleitungen mit dem Digitalisiergerät in Verbindung steht, mit einem längsverschiebbaren Markierstift, einem elektrischen Tastschalter sowie einem den Markierstift umgebenden Spulenkörper mit einer Induktionsspule, d a d u r c h   g e k e n n - z e i c h n e t , daß der Markierstift als Bleistifteinsatz mit nachschiebbarer Graphit-Mine (7) ausgebildet ist, daß der Spulenkörper (4) einen Steckrand (29) trägt, elektrische Steckbuchsen (30) aufweist, eine Minenbremse (34) enthält und eine Minenführung (32) trägt, daß eine den Tastschalter betätigende, gegen den Druck einer Feder längsverschiebbare Griffhülse (3) vorhanden ist, die den Griffel über seine Länge wenigstens teilweise umgibt, und daß an der Griffhülse (3) ein Drehring (23) drehbar befestigt ist, der einen elektrischen Ein-Aus-Schalter betätigt.

2. Elektronischer Griffel nach Anspruch 1,  d a - d u r c h   g e k e n n z e i c h n e t , daß der Bleistifteinsatz eine Feinmineneinheit (1) mit Minenbehälter (8) sowie Schieb- und Klemmvorrichtung (9) ist.

3. Elektronischer Griffel nach Anspruch 2,  d a - d u r c h   g e k e n n z e i c h n e t , daß die Feinmineneinheit (1) in einem Trägerrohr (2) sitzt.

4. Elektronischer Griffel nach Anspruch 3, d a - d u r c h  g e k e n n z e i c h n e t , daß am einen Ende des Trägerrohres (2) eine aus einem elektrisch isolirenden Material bestehende Zentrierhülse (13) vorgesehen ist, welche Steckkontakte (14) trägt.

5. Elektronischer Griffel nach Anspruch 4, d a - d u r c h  g e k e n n z e i c h n e t , daß auf dem Trägerrohr (2) vier elektrische Leiterbahnen (15) isoliert befestigt sind, welche von einer Kontaktplatte (16) mit vier Kontakten (17) ausgehen.

6. Elektronischer Griffel nach Anspruch 5, d a - d u r c h  g e k e n n z e i c h n e t , daß zwei Leiterbahnen (15) mit den Steckkontakten (14) verbunden sind.

7. Elektronischer Griffel nach Anspruch 5 oder 6, d a d u r c h  g e k e n n z e i c h n e t , daß der Ein-Aus-Schalter mit dem Tastschalter kombiniert und durch zwei im Abstand nebeneinander liegende Verbreiterungen (19 und 20) von zwei Leiterbahnen (15) gebildet ist, über denen eine elektrisch leitende Kontaktpille (21) gleitet, die in einer am Drehring (23) angesetzten, aus isolierendem Material bestehenden Kontakthülse (24) sitzt.

8. Elektronischer Griffel nach Anspruch 5, d a - d u r c h  g e k e n n z e i c h n e t , daß auf dem Trägerrohr (2) im Bereich der Kontaktplatte (16) eine das Trägerrohr (2) umfassende, im Querschnitt U-förmige Kabelklammer (5) aufgeschoben ist, welche mit zwei Längsnuten (35) versehen ist.

0092177

9. Elektronischer Griffel nach Anspruch 8, d a -
d u r c h   g e k e n n z e i c h n e t , daß in die
Kabelklammer (5) ein Kabelschuh (6) einschiebbar ist, in
welchen die elektrischen Verbindungsleitungen (37) an
einer flexiblen Leiterplatte (45) angelötet sind, die
um eine Druckwalze (42) gelegt ist, die in einer Leiterplattenklammer (40) mit zwei Längsrinnen (41) steckt,
wobei die Druckwalze (42) eine Längsausnehmung (43)
trägt, in welche ein Stab (44) aus elastischem Schaumstoff
eingelegt ist.

0092177

8          10

**Fig. 1a**

**Fig. 1b**

32  31  30  33  29  14  13                    22

7   49   4   7   34   12   48   9   3   11

# Fig. 1c

10

Fig. 2a

Fig. 3a

Fig. 2 b

Fig. 3 b

Fig. 2c

Fig. 3c

Fig. 4

**Fig. 5**

**Fig. 6**

**Fig. 8**

**Fig. 7**

37

45

46

**Fig. 9**